# EUROPEAN PATENT SPECIFICATION

(11) **EP 1 697 151 B1**
(45) Date of publication and mention of the grant of the patent: **16.06.2010**
(21) Application number: 03800014.7
(22) Date of filing: 19.12.2003
(51) Int. Cl.: B60C 17/02, B60C 17/04, B60C 17/06

(54) **A RUN-FLAT SUPPORT RING WITH IMPROVED MOUNTING FEATURES**
RUN-FLAT-STÜTZRING MIT VERBESSERTEN BEFESTIGUNGSMERKMALEN
ANNEAU DE SUPPORT DE ROULAGE A PLAT A CARACTERISTIQUES DE MONTAGE AMELIOREES

(43) Date of publication of application: 06.09.2006
(73) Proprietor: Société de Technologie Michelin, 63000 Clermont-Ferrand (FR); Michelin Recherche et Technique S.A., 1463 Granges-Paccot (CH)
(72) Inventor: CHRISTENBURY, Damon, Fountain Inn, SC 29644 (US)
(74) Representative: Schlief, Thomas P.
(86) International application number: PCT/US2003/040577
(87) International publication number: WO 2005/068227

(56) References cited:
- US-A- 5 891 279
- US-A1- 2003 005 991
- US-A1- 2003 106 625
- US-B1- 6 415 839
- US-B1- 6 463 972
- US-B1- 6 598 633
- US-B2- 6 564 842
- US-B2- 6 609 549

## Description

### TECHNICAL FIELD OF THE INVENTION

The present invention relates to an improved design for a run-flat support ring, which is a component mounted upon a rim inside a tire to extend the distance the tire may travel at reduced or zero inflation pressure. More particularly, the present invention relates to a run-flat support ring with features that improve the process of mounting the support ring onto a rim and features that better tolerate variations, within manufacturing tolerances, in the relative diameters of the rim and the support ring

### BACKGROUND OF THE INVENTION

Solutions have been proposed for assemblies that allow extended operation of a vehicle after a partial or total loss of air pressure. Many of these systems include multiple components that are complicated and time consuming to use or assemble. U. S. Patent No. 5,891, 279 overcomes some of these difficulties. Such patent describes an assembly that includes a tire, a rim with a unique profile designed to accept the tire, and a deformable, but preferably circumferentially inextensible, run-flat support ring that is mounted over an essentially cylindrical bearing surface of the rim. The base of the support ring includes essentially inextensible, circumferentially oriented reinforcement elements to create an interference fit between the support and bearing surface of the rim. U. S. Patent Application Publication US2003/0005991 also describes a rim and run-flat support ring that includes a plurality of zones having protuberances on the bearing surface of the support but without a complementary depression in the rim.

US 6,598,633 B1 discloses a tire safety run-flat support ring with several circumferentially distributed centering protuberances 12, 71 having a tapered shape in the axial direction for better mounting and demounting the support ring. More precisely, the first function of the protuberances is to generate radial tightening and centering stresses on mounting of the support ring on the support bearing of the rim. The second role of the protuberances is to allow obtaining sufficient centering stresses in a wide range of speeds in order to preserve good centering of the support, without unbalancing.

US 6,415,839 B1 describes a rim intended to receive a run-flat support ring. According to one embodiment, the bearing surface of the rim comprises an annular groove intended to receive a continuous annular protuberance located on the inner surface of the support ring in order to prevent any axial displacement of said ring during travel.

The design of a run-flat support ring includes competing considerations of performance under run-flat conditions and assembly of the run-flat system. A certain amount of axial locating force is required when a run-flat support is mounted upon the rim. Preferably, this force is sufficiently low to allow proper seating of the support during mounting or dismounting. However, for run-flat operation, the force for unseating the ring from the rim must be sufficiently high so that the support maintains its proper position during reasonable
vehicle operation. A run-flat support that optimizes these competing considerations is preferred.

Furthermore, even when manufactured within reasonable and acceptable tolerances, a run-flat support having a diameter that is within the low end of its manufacturing tolerance may be particularly difficult to mount and dismount with a rim having a diameter that is within the upper end of its manufacturing tolerance. A run-flat support that more readily tolerates variances of the support and rim within the allowed manufacturing tolerances is also preferred.

### SUMMARY OF THE INVENTION

Objects and advantages of the invention will be set forth in part in the following description, or may be obvious from the description, or may be learned through practice of the invention.

The present invention provides a run-flat support ring having features that improve the mounting and dismounting requirements for the support ring while still providing a fit that maintains the lateral and circumferential position of the support ring during proper operation of the vehicle under conditions of partial or total loss of inflation pressure.

In one exemplary embodiment, the present invention provides a run-flat support ring for mounting inside a tire on a wheel rim. The wheel rim has at least one annular depression and one annular raised surface. The support ring includes a substantially cylindrical member that is configured for mounting around the wheel rim. This member has a radially outermost surface that is provided for contacting the tread strip region of the tire in the event of a loss of air pressure. This substantially cylindrical member also has a radially innermost surface for securing the member to the wheel rim. The radially inner-most surface includes the following features. First, this surface includes a plurality of circumferentially placed protuberances configured to engage the annular depression on the wheel rim. These protuberances, in combination with the annular depression, resist lateral displacement of the support ring from the rim. Second, it includes a plurality of circumferentially placed tabs configured for engaging the wheel rim proximate to the annular depression. These tabs operate to resist rotation of the support ring relative to the rim. Third, this surface includes a plurality of circumferentially positioned ribs, extending longitudinally along the axial direction, and configured for engaging the annular raised surface of the wheel rim. These protuberances facilitate mounting the support ring upon the rim. For certain embodiments, the tabs may be located at least partially between the protuberances. The tabs may also be rectangular in shape, although the present invention is not so limited. The ribs may be located axially adjacent to, and inboard of, the tabs, although, other configurations will be appreciated by one of ordinary skill in the art using the teachings disclosed herein. The protuberances may have numerous specified heights relative to the radial innermost surface. A height of about 1.7 mm or less in height relative to the radial inner-most surface is preferred for certain embodiments. Finally, the plurality of circumferentially located protuberances may include, in certain embodiments, between 8 to 12 such ribs that are equally spaced circumferentially about the radially innermost surface,

In another exemplary embodiment, there is provided a run-flat support ring for mounting on a wheel rim inside a vehicle's tire in order to support the tread strip region of the tire in the event of a loss of inflation pressure. The wheel rim has an axis about which rotation occurs during operation. The rim also defines an annular recess and defines a seat for the support ring that includes an outboard bearing surface and an inboard bearing surface. The inboard bearing surface is located at a greater radial distance from the axis of rotation than the outboard bearing surface. The support ring includes a substantially cylindrical base designed for placement around the wheel rim. The base defines a plurality of clips that are configured for positioning into the annular recess around the wheel rim. The support ring also includes a substantially cylindrical cap configured for contact with the tread strip region in the event of a sufficient loss of air pressure. The ring also includes a substantially cylindrically-shaped body connecting the base and the cap. This body defines a plurality of cavities that have openings that alternate between an inboard side and an outboard side of the tire.

In still another exemplary embodiment, there is provided a support member for mounting on a wheel rim within a tire. The wheel rim has a groove located circumferentially about a radially outermost surface of the wheel rim. The support member includes a substantially inextensible, circular body, configured for mounting upon the wheel rim. The member also has a radially inner-most surface that defines multiple raised segments, configured for placement within the groove of the rim. These raised segments each have a longitudinal axis that is oriented circumferentially along the radially innermost surface and are separated from one another by a predetermined distance.

These and other features, aspects and advantages of the present invention will become better understood with reference to the following description and appended claims. The accompanying drawings, which are incorporated in and constitute a part of this
specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in this specification, which makes reference to the appended figures, in which:

FIG. 1 is a perspective view of an exemplary embodiment of the present invention viewed from the outboard side.

FIG. 2 is a perspective and close-up view of a section of the exemplary embodiment illustrated in FIG. 1.

FIG. 3 is a cross-section view of the exemplary embodiment of FIG. 1 as mounted upon a representative rim.

FIG. 4 is a perspective view of another exemplary embodiment of the present invention viewed from the outboard side.

FIG. 5 is a perspective and close-up view of a section of the exemplary embodiment illustrated in FIG. 4.

FIG. 6 is a plot of certain data as described more fully below.

Repeat use of reference characters in the present specification and drawings is intended to represent same or analogous features or elements of the invention.

### DETAILED DESCRIPTION OF THE PREFERRED EMBODIMENTS

The present invention provides a support ring having improved mounting and dismounting characteristics and is for use inside a tire as part of a run-flat system for operation at reduced or zero inflation pressure. Reference will now be made in detail to embodiments of the present invention, one or more examples of which are illustrated in the drawings. Each example is provided by way of explanation of the invention, and not meant as a limitation of the invention. For example, features illustrated or described as part of one embodiment can be used with another embodiment to yield still a third embodiment. It is intended that the present invention include these and other modifications and variations.

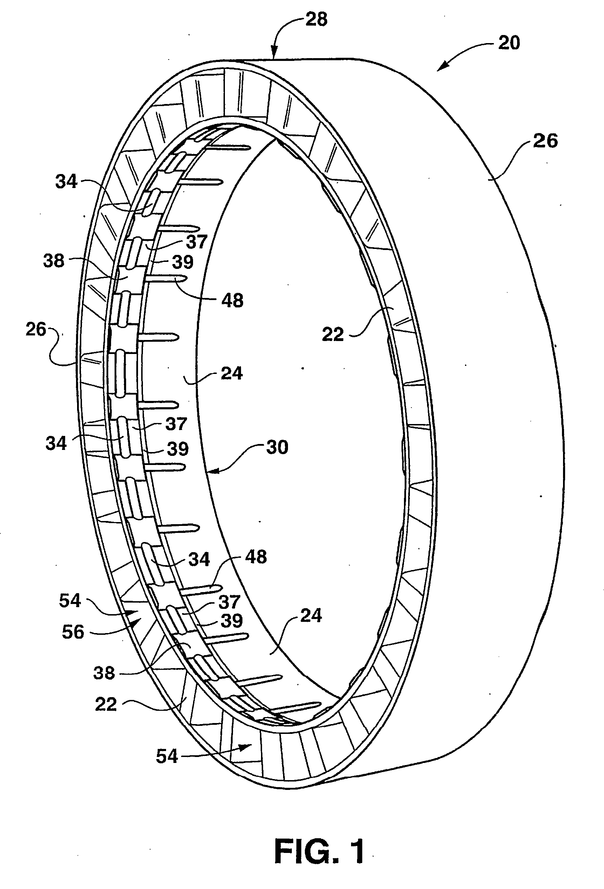

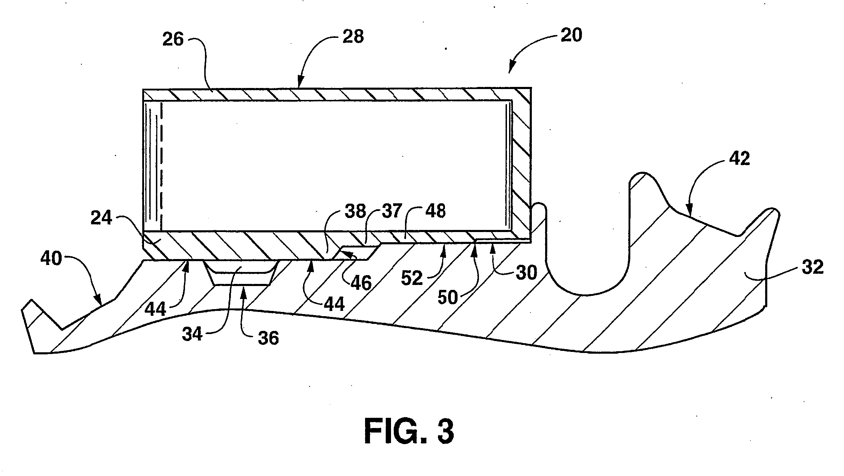

An exemplary embodiment of the present invention is depicted in FIGS.1 through 3. A run-flat support ring 20, also referred to as a support ring, is provided with a substantially cylindrically-shaped body 22 that connects a substantially cylindrical base 24 to a substantially cylindrical cap 26. Support ring 20 is placed over a rim 32 (FIG. 3) as part of a run-flat tire system. One of ordinary skill in the art will understand the process by which a support ring is placed within a tire and mounted upon a rim 32 by rotating the assembly and applying certain lateral forces until properly seating the run-flat assembly. During zero or low-pressure operation of the properly mounted support ring 20, radially outermost surface 28 of support ring 20 contacts the inner surface of the tire, referred to herein as the tread strip region, to provide improved handling characteristics during reasonable vehicle operation.

Radially inner-most surface 30 is supported upon rim 32 of the run-flat tire system. As shown in FIG. 3, when properly positioned upon rim 32, support ring 20 rests upon a support ring seat that includes outboard bearing surface 44 and inboard bearing surface 52. A plurality of protuberances 34, also referred to as clips, are defined by surface 30 of support ring 20 and positioned along the circumferential direction of run-flat support ring 20. Each protuberance 34 is positioned within an annular recess 36 defined by rim 32. For the exemplary embodiment of FIGS. 1 through 3, each protuberance 34 may have a height of about 1.7 mm or less relative to radially inner-most surface 30. As support ring 20 is substantially inextensible, protuberances 34 resist dismounting or movement of support ring 20 in the axial direction during reasonable vehicle operation.

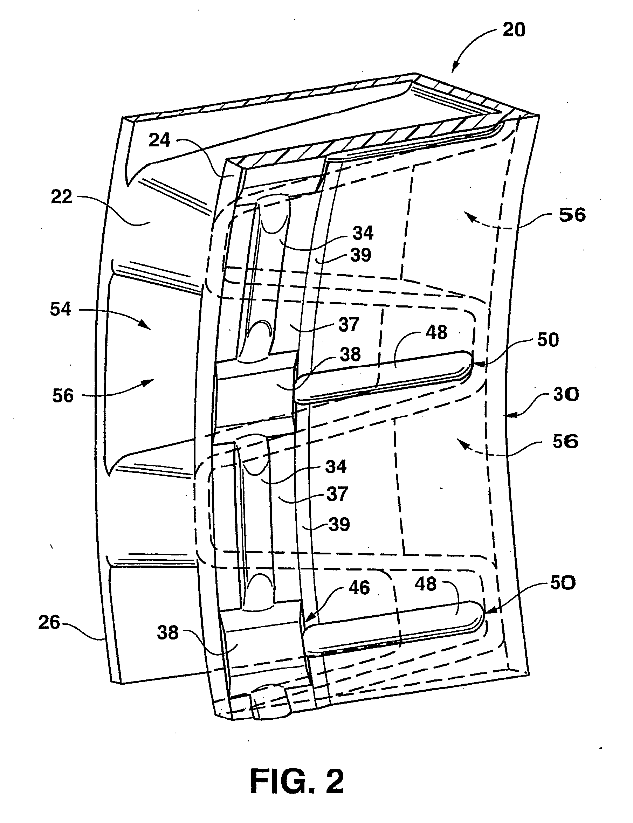

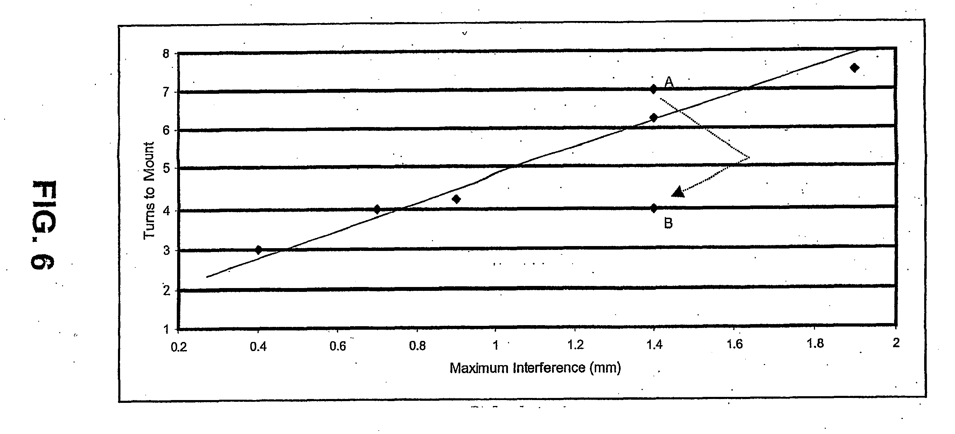

Rather than a plurality of spaced or segmented protuberances 34 as shown in FIGS. 1 and 2, previous support rings have included a continuous clip or protuberance oriented circumferentially along the radially innermost surface and typically configured for positioning within a recess on the rim. One part of applicant's invention is the discovery that segmenting this continuous clip into a plurality of spaced protuberances 34, as shown for example in FIGS. 1 and 2, provides improved mounting and dismounting characteristics for support ring 20. FIG. 6 illustrates the effect of segmentation of the continuous clip into a plurality of clips or protuberances. One of ordinary skill in the art will understand the process by which a support ring is mounted upon a rim by rotating the rim while a lateral force is applied to seat the ring onto the rim. In FIG. 6, the x-axis represents the amount of interference between the protuberances or clips on a support ring and the mounted rim. The γ-axis represents the number of times the rim had to be turned during the mounting process in order to properly seat the support ring onto the rim.

One design objective for a support ring is to minimize the number of turns required to mount the support ring onto the rim. As represented by a line drawn through the data in FIG. 6, as the amount of interference increases the number of turns required to mount the support ring also increases. Applicant determined that for a given interference, the number of turns required to mount the support ring decreased significantly by segmenting the continuous clip into a plurality of protuberances or clips. For example, for an interference of 1.4 mm, removing 100 mm from an otherwise continuous clip to create a plurality of protuberances or clips about the circumference of the support ring had the effect of decreasing the number of turns required to mount the support ring from 7 turns (Point A) to 4 turns (Point B) as depicted in FIG. 6. The result represents a substantial improvement in the time and labor required for mounting the support ring. Additional testing also revealed that separating the continuous clip into a plurality of protuberances or clips could be accomplished without unacceptably compromising the ability of the support ring to resist dismounting from the rim when operating forces are applied - such as when the vehicles turns or impacts a curb during reasonable operation at low or zero inflation pressures. It should be understood that an improvement in mounting characteristics can be achieved by removing only a single section of about 10 mm in length from a clip that is otherwise continuous circumferentially about the inner surface of the support ring, and such is within the scope of the present invention. This single discontinuity provides for a thread-like effect as the support ring is turned relative to the rim during the mounting process. Preferably, however, multiple discontinuities (which create a plurality of clips) are uniformly spaced about the inner surface of the support ring to further enhance this thread-like effect.

Returning to the discussion of the exemplary embodiment of FIGS. 1 through 3, a plurality of rotation resisting surfaces or tabs 38 are spaced about run-flat support ring 20. For this exemplary embodiment, each individual tab 38 is at least partially located between two protuberances 34. By way of example only, each tab 38 may have a height of about 1.5 mm or less relative to radially inner-most surface 30.

During mounting, support ring 20 is moved onto rim 32 in the inboard direction, which in FIG. 3 is a direction from outboard rim seat 40 towards inboard rim seat 42. As this movement takes place, rim 32 contacts an annular band 37 defmed by radially-innermost surface 30. Contact with band 37 occurs first along the sloped, inboard edge 39 of surface 30. As shown in FIG. 2, the slope of edge 39 is preferably at an angle of about 30 degrees and facilitates positioning of the support ring 20. Using the teachings disclosed herein, one of ordinary skill in the art will appreciate that other slope angles may be used. As lateral movement of the support ring 20 continues in the inboard direction, tab 38 makes contact with rim 32 along outboard bearing surface 44. The inboard edge 46 of each tab 38 is also sloped to provide a slight ramp. This feature also further facilitates the placement of support ring 20 onto rim 32 during the mounting process and provides a means of compensating for variations within manufacturing tolerances for support ring 20 and rim 32. As shown in FIG. 3, once support ring 20 is in the proper position, tabs 38 contact rim 32 along portions of outboard bearing surface 44 that are adjacent to annular recess 36. The interference between tab 38 and rim 32 helps secure the position of support ring 20 and provides resistance against the undesirable rotation of support ring 20 relative to rim 32 during reasonable vehicle operation.

Referring to FIG. 1 and FIG. 2, also positioned upon radially inner-most surface 30 are a plurality of ribs 48 that are each located axially adjacent to, and to the inboard side of, tabs 38. Each rib 48 is longitudinally oriented along the axial direction. For the exemplary embodiment being discussed, each rib 48 has a height of about 1.2 mm or less relative to radially inner-most surface 30 and also has a height slightly less than protuberance 34. As support ring 20 is moved onto rim 32 during the mounting process, inboard edge 50 of rib 48 makes contact with inboard bearing surface 52. To enhance the ease by which that support ring 20 is mounted onto rim 32, the inboard edge 50 of each rib 48 is curvilinear in shape as shown in FIG. 2. This feature, like inboard edge 46, also helps to ensure the support ring 20 can be more readily mounted despite variations in the size of the support ring 20 and rim 32 within manufacturing tolerances. Once support ring 20 is in position as shown in FIG. 3, ribs 48 contribute to the interference fit between support ring 20 and rim 32 and thereby help secure the assembly. More specifically, inboard bearing surface 52 is at a greater radial distance from the axis of rotation of rim 32 than outboard bearing surface 44, and ribs 48 provide an interference fit through contact with inboard bearing surface 52.

As shown in FIG. 1 and FIG. 2, cylindrically-shaped body 22 has a plurality of cavities 54. These cavities 54 are created by a winding pattern, along the circumferential direction, of body 22. Cavities 54 are longitudinally oriented along the axial direction and have openings 56 in an alternating pattern between the inboard and outboard sides of support ring 20. Although not required, preferably each tab 38 is located radially adjacent to the opening 56 of at least one of such cavities 54. The overall shape of body 22 can be varied as can the relative width and length of protuberances 34, tabs 38, and ribs 48.

Run-flat support ring 20 can be constructed from a variety of different materials. In general, a material having a tensile modulus at 10 percent strain of 10 to 100 MPa should be used. By way of example, but not limitation, suitable materials include polyurethane, thermoplastic elastomers, and rubber. Additionally, while body 22, base 24, and cap 26 may be individually constructed and combined to create support ring 20, preferably these parts are molded as a single component to create support ring 20. It should also be noted that while the present description has been provided using the particular configuration for a rim 32 as shown in FIGS. 1 through 3, the present invention is not limited to any particular rim configuration as will be understood by one of skill in the art using the teachings disclosed herein.

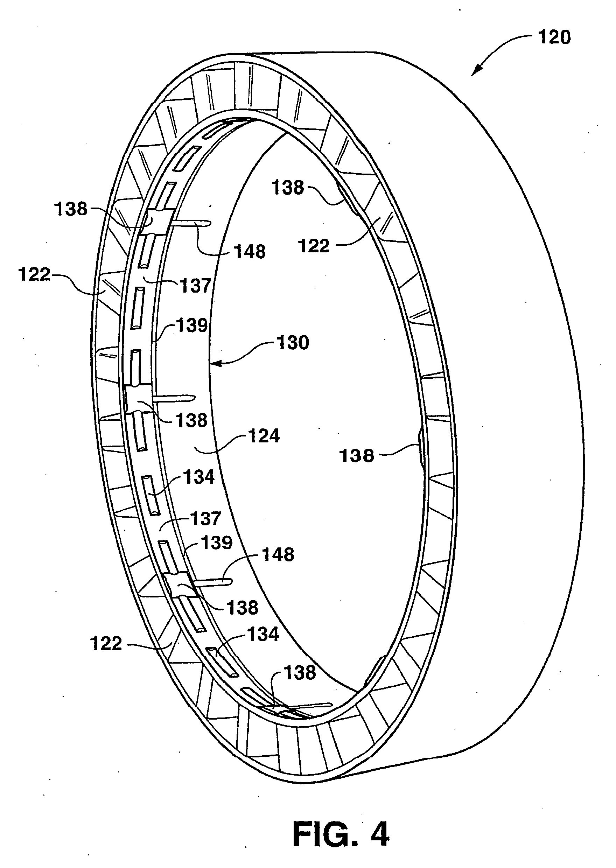

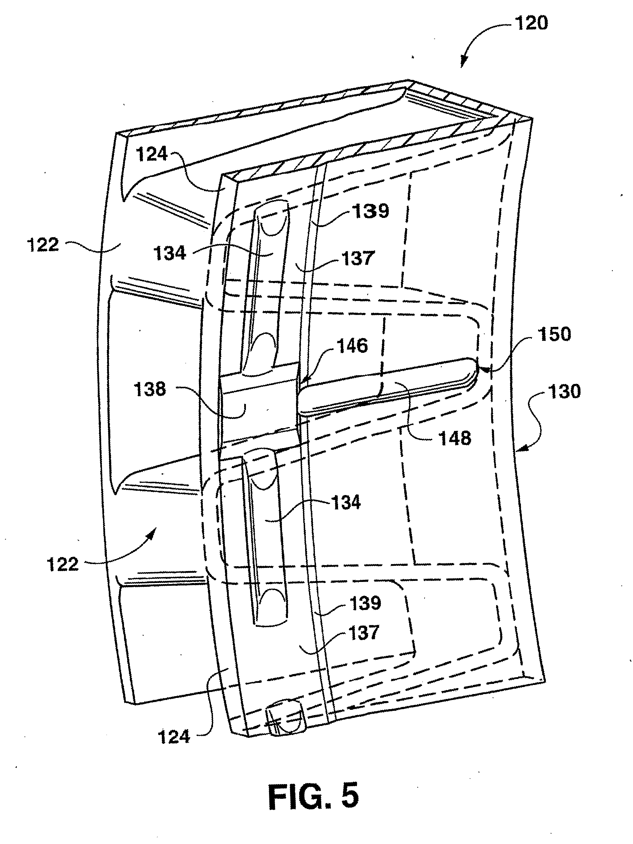

Additionally, using the teachings disclosed herein, one skilled in the art will appreciate numerous other variations and alternative embodiments that fall within the spirit of the invention and scope of the claims set forth below. By way of example only, one such alternative embodiment of the present invention is depicted in FIGS. 4 and 5. A run-flat support 120 is provided having a substantially cylindrically-shaped body 122, a substantially cylindrical base 124, and a substantially cylindrical cap 126. As with previously discussed embodiments, support 120 is provided with a plurality of clips or protuberances 134 that are spaced circumferentially along radially inner-most surface 130. Protuberances 134 also fit into a recess on a rim of a run-flat support system to provide resistance against axial displacement of support 120 from a rim.

Unlike previously discussed exemplary embodiments, support 120 does not include a tab between each of the protuberances 134. Instead, eight tabs 138 are equally spaced about radially inner-most surface 130 of support 120. Each tab 138 includes a sloped inboard edge 146 to facilitate the mounting of support 120 upon a tire rim as previously described. Additionally, a plurality of ribs 148 are also provided at positions axially adjacent to teach tab 138 and are longitudinally oriented along the axial direction of support 120. Each rib 148 has an inboard edge 150 that is curvilinear in shape to further enhance the mounting of support 120 onto a rim as also previously described.

Multiple variations of the present invention are possible wherein different numbers of tabs 138 and ribs 148 are positioned at different locations about radially inner-most surface 130. Applicant has determined that between about eight to twelve tabs are preferred for certain applications. However, the present invention is not so limited.

Using the teachings disclosed herein, variations can be used to tune or optimize the run-flat support ring for the specific application under consideration while also providing a support ring that is more readily mounted and dismounted from the rim and still functioning to support the tread strip region during reasonable vehicle operation in period of low or zero inflation pressure. It should be appreciated by those skilled in the art that modifications and variations can be made to the support ring as described herein, without departing from the scope of the claims. It is intended that the invention include such modifications and variations as come within the scope of the appended claims.

## Claims

1. A run-flat support ring (20; 120) for mounting on a wheel rim (32) inside of a tire in order to support a tread strip region of the tire in the event of a loss of inflation pressure, the wheel rim (32) having at least one annular depression (36) and one annular raised surface (52), the run-flat support ring comprising a substantially cylindrical body (22) that connects a substantially cylindrical base (24) to a substantially cylindrical cap (26), wherein the substantially cylindrical base (24) has a radially inner-most surface (30; 130) designed for placement around the wheel rim (32) and wherein the substantially cylindrical cap (26) has a radially outermost surface (28) for contacting the tread strip region of the tire in the event of a loss of inflation pressure,
**characterized in that** the radially inner-most surface (30; 130) includes:
a plurality of circumferentially placed tabs (38; 138) configured for engaging the wheel rim (32) proximate to the depression (36);
a plurality of circumferentially placed ribs (48; 148), extending longitudinally along the axial direction and configured for engaging the annular raised surface (52); and
a) a plurality of circumferentially-oriented protuberances (34; 134) to engage said depression (36), or
b) only one circumferentially-oriented protuberance (34; 134) having one single discontinuity of at least 10 mm along the circumference to engage said depression (36).

2. The support ring of claim 1, comprising a plurality of said protuberances (34; 134), wherein the tabs (38; 138) are located at least partially between the protuberances (34; 134).

3. The support ring of claim 2, comprising a plurality of said protuberances (34; 134), wherein the tabs (38; 138) are rectangular in shape.

4. The support ring of any one of claims 1 to 3, comprising a plurality of said protuberances (34; 134), wherein the ribs (48; 148) are located axially adjacent to and inboard of the tabs (38; 138).

5. The support ring of any one of claims 1 to 4, comprising a plurality of said protuberances (134), wherein the ribs (148) number between about 8 and about 12 and are spaced circumferentially about the radial inner-most surface (130).

6. The support ring of any one of claims 1 to 5, comprising a plurality of said protuberances (34; 134), wherein the protuberances (34; 134) are no more than about 1.7 mm in height relative to the radial inner-most surface (30; 130).

## Patentansprüche

1. Notlaufstützring (20; 120) zum Montieren auf einer Felge (32) innerhalb eines Reifens, um einen Laufstreifenbereich des Reifens im Falle eines Verlusts von Luftdruck zu stützen, wobei die Felge (32) mindestens eine ringförmige Vertiefung (36) und eine ringförmige erhabene Fläche (52) aufweist, wobei der Notlaufstützring einen im Wesentlichen zylindrischen Körper (22) umfasst, der eine im Wesentlichen zylindrische Basis (24) mit einer im Wesentlichen zylindrischen Kappe (26) verbindet, wobei die im Wesentlichen zylindrische Basis (24) eine radial innerste Fläche (30; 130) aufweist, die zum Auflegen um die Felge (32) ausgelegt ist und wobei die im Wesentlichen zylindrische Kappe (26) eine radial äußerste Fläche (28) zum Kontakt mit dem Laufstreifenbereich des Reifens im Falle eines Verlusts von Luftdruck aufweist,
**dadurch gekennzeichnet, dass** die radial innerste Fläche (30; 130) enthält:
eine Vielzahl von umlaufend angeordneten Streifen (38; 138), die gestaltet sind, sich mit der Felge (32) unmittelbar nahe der Vertiefung (36) zu koppeln;
eine Vielzahl von umlaufend angeordneten Rippen (48; 148), die sich längs entlang der axialen Richtung erstrecken und gestaltet sind, sich mit der ringförmigen erhabenen Fläche (52) zu koppeln; und
a) eine Vielzahl von umlaufend ausgerichteten Vorsprüngen (34; 134), um sich mit der Vertiefung (36) zu koppeln, oder
b) nur einen umlaufend ausgerichteten Vorsprung (34; 134), der eine einzige Unterbrechung von mindestens 10 mm entlang des Umfangs aufweist, um sich mit der Vertiefung (36) zu koppeln.

2. Stützring nach Anspruch 1, umfassend eine Vielzahl der Vorsprünge (34; 134), wobei sich die Streifen (38; 138) zumindest teilweise zwischen den Vorsprüngen (34; 134) befinden.

3. Stützring nach Anspruch 2, umfassend eine Vielzahl der Vorsprünge (34; 134), wobei die Streifen (38; 138) eine rechteckige Form aufweisen.

4. Stützring nach einem beliebigen der Ansprüche 1 bis 3, umfassend eine Vielzahl der Vorsprünge (34; 134), wobei sich die Rippen (48; 148) axial benachbart zu den und innenseitig der Streifen (38; 138) befinden.

5. Stützring nach einem beliebigen der Ansprüche 1 bis 4, umfassend eine Vielzahl der Vorsprünge (134), wobei die Anzahl der Rippen (148) zwischen ungefähr 8 und ungefähr 12 beträgt und sie um den Umfang der radial innersten Fläche (130) verteilt sind.

6. Stützring nach einem beliebigen der Ansprüche 1 bis 5, umfassend eine Vielzahl der Vorsprünge (34; 134), wobei die Höhe der Vorsprünge (34; 134) nicht mehr als ungefähr 1,7 mm bezüglich der radial innersten Fläche (30; 130) beträgt.

## Revendications

1. Anneau de support à roulage à plat (20; 120) pour le montage sur une jante de roue (32) à l'intérieure d'un pneumatique pour supporter une région de bande de roulement du pneumatique dans l'éventualité d'une perte de la pression de gonflage, ladite jante de roue (32) comportant au moins une dépression annulaire (36) et une surface annulaire surélevée (52), ledit anneau de support de roulage à plat comprenant un corps substantiellement cylindrique (22) qui connecte une base substantiellement cylindrique (24) à une chape substantiellement cylindrique (26), sachant que ladite base substantiellement cylindrique (24) possède une surface radialement la plus centrale (30; 130) conçue pour le placement autour de la jante de roue (32), et sachant que la chape substantiellement cylindrique (26) possède une surface radialement la plus extérieure (28) pour entrer en contact avec la région de bande de roulement du pneumatique dans l'éventualité d'une perte de la pression de gonflage,
**caractérisé en ce que** la surface radialement la plus centrale (30; 130) comprend:
une multitude de languettes disposées circonférentiellement (38; 138), configurées pour entrer en prise avec la jante de roue (32) à proximité de la dépression (36) ;
une multitude de nervures disposées circonférentiellement (48; 148), s'étendant longitudinalement le long de la direction axiale et configurées pour entrer en prise avec la surface annulaire surélevée (52) ; et
a) une multitude de protubérances orientées circonférentiellement (34; 134) pour entrer en prise avec ladite dépression (36) ou
b) une seule protubérance orientée circonférentiellement (34; 134) possédant une discontinuité unique de 10 mm au moins le long de la circonférence pour entrer en prise avec ladite dépression (36).

2. Anneau de support selon la revendication 1, comportant une multitude desdites protubérances (34; 134), sachant que les languettes (38; 138) sont disposées au moins partiellement entre les protubérances (34; 134).

3. Anneau de support selon la revendication 2, comportant une multitude desdites protubérances (34; 134), sachant que les languettes (38; 138) sont de forme rectangulaire.

4. Anneau de support selon l'une quelconque des revendications 1 à 3, comportant une multitude desdites protubérances (34; 134), sachant que les nervures (48; 148) sont disposées à des positions axialement adjacentes et à l'intérieur des languettes (38; 138).

5. Anneau de support selon l'une quelconque des revendications 1 à 4, comportant une multitude desdites protubérances (134), sachant que les nervures (148) sont en nombre de 8 environ à 12 environ et qu'elles sont espacées les unes des autres sur la circonférence, sur la surface radialement la plus centrale (130).

6. Anneau de support selon l'une quelconque des revendications 1 à 5, comportant une multitude desdites protubérances (34; 134), sachant que les protubérances (34; 134) présentent une hauteur de pas plus de 1,7 mm environ par rapport à la surface radialement la plus centrale (30; 130).
